# EUROPÄISCHE PATENTANMELDUNG

(11) **EP 4 258 139 A1**
(43) Veröffentlichungstag der Anmeldung: **11.10.2023**
(21) Anmeldenummer: 22167084.7
(22) Anmeldetag: 07.04.2022
(51) Int. Cl.: G06F 21/16, G06N 3/04, G06N 3/08

(54) **VERFAHREN ZUM DIEBSTAHLSCHUTZ VON MASCHINENLERNMODULEN SOWIE SCHUTZSYSTEM**

(71) Anmelder: Siemens Aktiengesellschaft, 80333 München (DE)
(72) Erfinder: Depeweg, Stefan, 14052 Berlin (DE); Tokic, Michel, 88069 Tettnang (DE); von Beuningen, Anja, 99085 Erfurt (DE); Strixner, Ferdinand, 81739 München (DE); Scharinger, Boris, 90762 Fürth (DE)
(74) Vertreter: Siemens Patent Attorneys

(57) **Zusammenfassung**

Zum Diebstahlschutz eines zur Prädiktion von Sensorsignal-Zeitreihen vorgesehenen Maschinenlernmoduls (NN) werden ein Eingabesignal (SI) in das Maschinenlernmodul (NN) eingespeist und ein Frequenzspektrum eines resultierenden Ausgabesignals (SP) generiert. Weiterhin wird im Frequenzspektrum eine Frequenzlücke (FG) ermittelt, und es wird ein Wasserzeichensignal (WM) mit einem in die Frequenzlücke (FG) fallenden Frequenzmuster generiert. Erfindungsgemäß wird das Maschinenlernmodul (NN) dann dahingehend weitertrainiert, dass ein Ausgabesignal (SP') mit aufmoduliertem Wasserzeichensignal (WM) ausgegeben wird. Das weitertrainierte Maschinenlernmodul (NN') wird daraufhin zur Benutzung bereitgestellt. Des Weiteren wird in ein vorliegendes Maschinenlernmodul (NN') ein Eingabesignal eingespeist, und es wird geprüft, ob ein resultierendes Ausgabesignal des vorliegenden Maschinenlernmoduls (NN') das Wasserzeichensignal (WM) enthält. Abhängig vom Prüfungsergebnis wird schließlich ein Alarmsignal (AS) ausgegeben.

## Beschreibung

Komplexe Maschinen, wie z.B. Roboter, Motoren, Fertigungsanlagen, Werkzeugmaschinen, Gasturbinen, Windturbinen oder Kraftfahrzeuge benötigen für einen produktiven und stabilen Betrieb in der Regel komplexe Steuerungs- und Überwachungsverfahren. Zu diesem Zweck werden in zeitgemäßen Maschinensteuerungen häufig Techniken des maschinellen Lernens eingesetzt. So kann z.B. ein neuronales Netz darauf trainiert werden, Sensorsignale einer zu steuernden Maschine vorherzusagen und/oder die Maschine in vorausschauend optimierter Weise zu steuern.

Ein Training von neuronalen Netzen oder anderen Maschinenlernmodulen zum Steuern von komplexen Maschinen erweist sich indessen häufig als sehr aufwendig. So werden in der Regel große Mengen von Trainingsdaten, erhebliche Rechenressourcen sowie viel spezifisches Expertenwissen benötigt. Mithin besteht ein großes Interesse daran, trainierte Maschinenlernmodule oder eine darin enthaltene Trainingsinformation gegen eine unkontrollierte oder unberechtigte Verbreitung oder Verwendung zu schützen und/oder Diebstähle zu erkennen.

Es ist bekannt, zur Diebstahlerkennung von künstlichen neuronalen Netzen deren neuronale Gewichte mit einem eindeutigen digitalen Wasserzeichen zu versehen, bevor sie in Verkehr gebracht werden. Anhand des Wasserzeichens kann dann ein vorliegendes neuronales Netz daraufhin geprüft werden, ob es vom Verwender des Wasserzeichens stammt.

Derartige Verfahren sind beispielsweise aus der Internet-Publikation https://arxiv.org/abs/2009.12153, "A Systematic Review on Model Watermarking for Neural Networks" von Franziska Boehnisch (abgerufen am 11. März 2022) bekannt.

Bekannte Verfahren sind allerdings häufig auf künstliche neuronale Netze und/oder spezielle Modellarchitekturen beschränkt und setzen in vielen Fällen einen Zugriff auf eine große Menge von Trainingsdaten voraus.

Es ist Aufgabe der vorliegenden Erfindung, ein Verfahren zum Diebstahlschutz eines Maschinenlernmoduls sowie ein entsprechendes Schutzsystem anzugeben, die breiter anwendbar sind.

Gelöst wird diese Aufgabe durch ein Verfahren mit den Merkmalen des Patentanspruchs 1, durch ein Schutzsystem mit den Merkmalen des Patentanspruchs 10, durch ein Computerprogrammprodukt mit den Merkmalen des Patentanspruchs 11 sowie durch ein computerlesbares Speichermedium mit den Merkmalen des Patentanspruches 12.

Erfindungsgemäß werden zum Diebstahlschutz eines Maschinenlernmoduls, das darauf trainiert ist, anhand einer Zeitreihe eines Sensorsignals spätere Signalwerte des Sensorsignals als Ausgabesignal zu prädizieren ein Eingabessignal in das Maschinenlernmodul eingespeist und ein Frequenzspektrum eines resultierenden Ausgabesignals generiert. Weiterhin wird im Frequenzspektrum eine Frequenzlücke ermittelt, und es wird ein Wasserzeichensignal mit einem in die Frequenzlücke fallenden Frequenzmuster generiert. Als Frequenzlücke kann dabei insbesondere ein Frequenzbereich aufgefasst werden, in dem das resultierende Ausgabesignal eine vergleichsweise geringere Spektralamplitude aufweist. Erfindungsgemäß wird das Maschinenlernmodul dann dahingehend weitertrainiert, dass ein Ausgabesignal mit aufmoduliertem Wasserzeichensignal ausgegeben wird. Das weitertrainierte Maschinenlernmodul wird daraufhin zur Benutzung bereitgestellt. Des Weiteren wird in ein vorliegendes Maschinenlernmodul ein Eingabesignal eingespeist, und es wird geprüft, ob ein resultierendes Ausgabesignal des vorliegenden Maschinenlernmoduls das Wasserzeichensignal enthält. Abhängig vom Prüfungsergebnis wird schließlich ein Alarmsignal ausgegeben.

Zur Durchführung des erfindungsgemäßen Verfahrens sind ein Schutzsystem, ein Computerprogrammprodukt sowie ein computerlesbares, vorzugsweise nichtflüchtiges Speichermedium vorgesehen.

Das erfindungsgemäße Verfahren sowie das erfindungsgemäße Schutzsystem können beispielsweise mittels eines oder mehrerer Computer, Prozessoren, anwendungsspezifischer integrierter Schaltungen (ASIC), digitaler Signalprozessoren (DSP) und/oder sogenannter "Field Programmable Gate Arrays" (FPGA) ausgeführt bzw. implementiert werden. Darüber hinaus kann das erfindungsgemäße Verfahren zumindest teilweise in einer Cloud und/oder in einer Edge-Computing-Umgebung ausgeführt werden.

Durch eine Erkennung des Wasserzeichensignals kann in vielen Fällen eine Authentizität oder eine Herkunft des vorliegenden Maschinenlernmoduls auf einfache Weise belegt werden. Dabei ist zur Erkennung des Wasserzeichensignals in der Regel kein Zugriff auf eine interne Struktur des Maschinenlernmoduls erforderlich. Vielmehr genügt es in vielen Fällen, ein reguläres Ausgabesignal des Maschinenlernmoduls zu prüfen. Da ein solches Ausgabesignal bei Maschinenlernmodulen zur zeitlichen Prädiktion oft zyklisch ist und insbesondere zeitlich wiederkehrende Muster aufweist, ist ein Frequenzspektrum des Ausgabesignals in vielen Fällen durch einzelne Frequenzspitzen geprägt. Zwischen derartigen Frequenzspitzen lassen sich geeignete Frequenzlücken in der Regel auf einfache Weise ermitteln.

Ein weiterer Vorteil der Erfindung ist insbesondere darin zu sehen, dass zum Schutz des Maschinenlernmoduls in der Regel kein Zugriff auf spezifische Trainingsdaten erforderlich ist. Damit können auch von Drittanbietern trainierte Maschinenlernmodelle mittels der Erfindung geschützt werden. Darüber hinaus ist die Erfindung flexibel anwendbar und insbesondere nicht auf künstliche neuronale Netze beschränkt.

Vorteilhafte Ausführungsformen und Weiterbildungen der Erfindung sind in den abhängigen Ansprüchen angegeben.

Gemäß einer vorteilhaften Ausführungsform der Erfindung kann zum Weitertrainieren des Maschinenlernmoduls dem resultierenden Ausgabesignal das Wasserzeichensignal aufmoduliert werden, um ein modifiziertes Ausgabesignal zu erhalten. Das Maschinenlernmodul kann dann darauf trainiert werden, das modifizierte Ausgabesignal zu reproduzieren. Insbesondere kann das Wasserzeichensignal einem resultierenden Ausgabesignal, das von dem in einem nicht weitertrainierten Zustand befindlichen Maschinenlernmodul stammt, aufmoduliert werden, um das modifizierte Ausgabesignal zum Weitertrainieren zu erhalten.

Zum Aufmodulieren des Wasserzeichensignals kann dieses mit dem resultierenden Ausgabesignal durch Addition, Subtraktion oder eine andere frequenzmustererhaltende numerische Verknüpfung verknüpft werden.

Weiterhin kann zum Generieren des Frequenzspektrums, zum Weitertrainieren des Maschinenlernmoduls und/oder zum Prüfen des vorliegenden Maschinenlernmoduls das Sensorsignal und/oder ein zufallsbasiertes Eingabesignal in das Maschinenlernmodul als Eingabesignal eingespeist werden. Insbesondere kann hierzu ein zufallsbasiertes Eingabesignal verwendet werden, das eine im Wesentlichen gleiche oder zumindest ähnliche statistische Verteilung aufweist wie das Sensorsignal.

Nach einer weiteren vorteilhaften Ausführungsform der Erfindung kann die ermittelte Frequenzlücke in einer Datenbank in Zuordnung zum bereitgestellten Maschinenlernmodul hinterlegt werden. Entsprechend kann das Frequenzmuster des Wasserzeichensignals in der dem bereitgestellten Maschinenlernmodul zugeordneten Frequenzlücke im resultierenden Ausgabesignal des vorliegenden Maschinenlernmoduls gesucht werden. Die Frequenzlücke kann hierbei insbesondere durch Angabe von Intervallgrenzen der Frequenzlücke und/oder durch Angabe einer maximalen oder mittleren in der Frequenzlücke vorliegenden Spektralamplitude des resultierenden Ausgabesignals in der Datenbank hinterlegt werden. Vorzugsweise können für unterschiedliche bereitgestellte Maschinenlernmodule unterschiedliche maschinenlernmodulspezifische Frequenzlücken selektiert, hinterlegt und nach einem jeweiligen Wasserzeichensignal durchsucht werden. In diesem Sinne kann eine maschinenlernmodulspezifische Frequenzlücke als Teil einer Wasserzeicheninformation aufgefasst werden.

Nach einer weiteren vorteilhaften Ausführungsform der Erfindung können mehrere Frequenzlücken im Frequenzspektrum ermittelt werden. Ausgehend davon können in den ermittelten Frequenzlücken vorliegende Spektralamplituden und/oder Frequenzen des resultierenden Ausgabesignals verglichen werden. Abhängig vom Vergleichsergebnis kann dann eine der ermittelten Frequenzlücken selektiert werden. Insbesondere kann eine Frequenzlücke selektiert werden, in der das resultierende Ausgabesignal eine geringere Spektralamplitude aufweist und/oder die in einem niedrigeren Frequenzbereich liegt als andere der ermittelten Frequenzlücken. Das Wasserzeichensignal kann dann mit einem in die selektierte Frequenzlücke fallenden Frequenzmuster generiert werden. Durch eine Einfügung des Wasserzeichensignals in eine möglichst niederfrequente Frequenzlücke und/oder in eine Frequenzlücke mit möglichst geringer Spektralamplitude wird eine bestimmungsgemäße Funktion des Maschinenlernmoduls in vielen Fällen weniger beeinträchtigt als bei einer Einfügung in andere Frequenzlücken.

Gemäß einer weiteren vorteilhaften Ausführungsform der Erfindung können mehrere Zeitreihen von Sensorsignalen in das Maschinenlernmodul eingespeist werden. Ausgehend davon können mehrere sensorsignalspezifische Ausgabespektren resultierender Ausgabesignale generiert werden. Als Frequenzlücke kann dann eine den Ausgabespektren gemeinsame Frequenzlücke ermittelt werden. Alternativ oder zusätzlich können auch mehrere signalspezifische Frequenzlücken ermittelt werden, in die ggf. signalspezifische Wasserzeichensignale durch Weitertrainieren des Maschinenlernmoduls eingefügt werden können.

Falls mehrere Zeitreihen von Sensorsignalen in das Maschinenlernmodul eingespeist werden, können resultierende Ausgabesignale auch zu einer sensorsignalübergreifenden Zeitreihe konkateniert werden. Als Frequenzspektrum kann dann ein Spektrum der konkatenierten Ausgabesignale generiert werden.

Unter der Voraussetzung, dass mehrere Zeitreihen von Sensorsignalen in das Maschinenlernmodul eingespeist werden, und dass mehrere sensorsignalspezifische Ausgabespektren resultierender Ausgabesignale generiert werden, können die Sensorsignale auch in Signalgruppen mit im Wesentlichen übereinstimmenden Frequenzlücken im jeweiligen Frequenzspektrum gruppiert werden. Als Frequenzlücke kann dann eine signalgruppenspezifische Frequenzlücke selektiert werden. In eine solche signalgruppenspezifische Frequenzlücke kann entsprechend ein signalgruppenspezifisches Wasserzeichensignal durch Weitertrainieren des Maschinenlernmoduls eingefügt werden. Vorzugsweise kann die signalgruppenspezifische Frequenzlücke in einer Datenbank in Zuordnung zum bereitgestellten Maschinenlernmodul und/oder zur betreffenden Signalgruppe gespeichert werden.

Ein Ausführungsbeispiel der Erfindung wird nachfolgend anhand der Zeichnung näher erläutert. Dabei veranschaulichen jeweils in schematischer Darstellung
- Figur 1: eine Steuerung einer Maschine mittels einer lernbasierten Steuereinrichtung,
- Figur 2: ein erfindungsgemäßes Schutzsystem für ein Maschinenlernmodul und
- Figur 3: ein Markieren eines Ausgabesignals des Maschinenlernmoduls durch ein Wasserzeichensignal.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

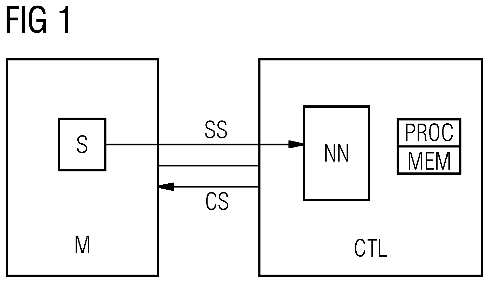

Figur 1 veranschaulicht eine Steuerung einer Maschine M mittels einer lernbasierten Steuereinrichtung CTL in schematischer Darstellung. Die Maschine M kann hierbei insbesondere ein Roboter, ein Motor, eine Fertigungsanlage, ein Fertigungsroboter, eine Werkzeugmaschine, ein Verkehrsleitsystem, eine Turbine, eine Verbrennungskraftmaschine und/oder ein Kraftfahrzeug sein oder eine solche Maschine umfassen.

Die Steuereinrichtung CTL verfügt über einen oder mehrere Prozessoren PROC zum Ausführen von erfindungsgemäßen Verfahrensschritten sowie über einen oder mehrere Speicher MEM zum Speichern von zu verarbeitenden Daten.

Die Steuereinrichtung CTL umfasst weiter ein Maschinenlernmodul NN und nutzt dieses zum Steuern der Maschine M. Das Maschinenlernmodul NN ist darauf trainiert, anhand einer oder mehrerer Zeitreihen eines oder mehrerer Sensorsignale SS der Maschine M spätere Signalwerte des mindestens einen Sensorsignals SS zu prädizieren, d.h. vorherzusagen.

Das Maschinenlernmodul NN kann insbesondere dazu verwendet werden, Zeitreihen von Sensorsignalen industrieller Sensoren zu prädizieren, die beispielsweise zur Messung einer Leistung, einer Drehzahl, eines Drehmoments, einer Bewegungsgeschwindigkeit, einer ausgeübten oder einwirkenden Kraft, einer Temperatur, eines Drucks, eines Ressourcenverbrauchs, eines Ressourcenvorrats, einer Luftverschmutzung und/oder eines Schadstoffausstoßes an der Maschine M oder in ihrer Umgebung vorgesehen sein können. Speziell kann das Maschinenlernmodul NN dazu verwendet werden, Zeitreihendaten von Kontaktschleifen aus der Straßenverkehrstechnik zu prädizieren oder Verbrauchprognosen, beispielsweise über eine zukünftige Energielast, einen zukünftigen Energiebedarf oder zukünftige Logistikanforderungen zu generieren.

Für das vorliegende Ausführungsbeispiel sei angenommen, dass das mindestens eine vom Maschinenlernmodul NN prädizierte Sensorsignal SS von der Steuereinrichtung CTL insbesondere dazu verwendet wird, vorausschauend optimierte Steuersignale CS zum Steuern der Maschine M zu generieren. Alternativ oder zusätzlich kann das mindestens eine prädizierte Sensorsignal SS auch zur Vorhersage von Betriebszuständen der Maschine M, zur Vorhersage von Umgebungsbedingungen, wie z.B. Luftqualitätswerten und/oder zur Vorhersage von wahrscheinlichen Fehlfunktionen oder Ausfällen der Maschine M verwendet werden.

Die Steuereinrichtung CTL ist an die Maschine M gekoppelt. In Figur 1 ist die Steuereinrichtung CTL extern zur Maschine M dargestellt. Alternativ dazu kann die Steuereinrichtung CTL aber auch ganz oder teilweise in die Maschine M integriert sein.

Die Maschine M weist eine Sensorik S auf, durch die fortlaufend Betriebssignale oder Betriebsparameter der Maschine M und/oder andere den Betrieb der Maschine M beeinflussende Größen, z.B. aus einer Umgebung der Maschine M gemessen oder anderweitig erfasst werden. Die von der Sensorik S erfassten Größen werden in Form der zeitlich aufgelösten Sensorsignale SS von der Maschine M zur Steuereinrichtung CTL übermittelt.

Durch die Sensorsignale SS wird ein Betriebszustand der Maschine M oder ein Betriebszustand von einer oder mehreren ihrer Komponenten im Zeitverlauf quantifiziert. Insbesondere können durch die Sensorsignale SS eine Leistung, eine Drehzahl, ein Drehmoment, eine Bewegungsgeschwindigkeit, eine ausgeübte oder einwirkende Kraft, eine Temperatur, ein Druck, ein aktueller Ressourcenverbrauch, vorhandene Ressourcen, ein Schadstoffausstoß, Vibrationen, ein Verschleiß und/oder eine Belastung der Maschine M oder von Komponenten der Maschine M quantifiziert werden.

Vorzugsweise werden die Sensorsignale SS jeweils durch eine Zeitreihe von Signalwerten oder durch eine Zeitreihe von numerischen Datenvektoren dargestellt und in dieser Form zur Steuereinrichtung CTL übermittelt.

Aus Übersichtlichkeitsgründen werden im Folgenden nur ein einzelnes Sensorsignal SS sowie ein einzelnes Steuersignal CS betrachtet, die aber stellvertretend auch den Fall mehrerer Sensorsignale SS bzw. mehrerer Steuersignale CS umfassen sollen.

Wie oben bereits angedeutet, ist das Maschinelernmodul NN darauf trainiert, anhand von bis zu einem aktuellen Zeitpunkt vorliegenden Signalwerten des Sensorsignals SS mindestens einen Signalwert des Sensorsignals SS für mindestens einen nach dem aktuellen Zeitpunkt liegenden Zeitpunkt vorherzusagen. Zum Training eines solchen prädiktiven Maschinenlernmoduls NN steht eine Vielzahl effizienter Verfahren des maschinellen Lernens zur Verfügung. Auf das Training des Maschinenlernmoduls NN wird unten noch näher eingegangen.

Das Maschinenlernmodul NN kann insbesondere als künstliches neuronales Netz implementiert werden. Alternativ oder zusätzlich kann das Maschinenlernmodul NN ein rekurrentes neuronales Netz, ein faltendes neuronales Netz, ein Perzeptron, ein bayessches neuronales Netz, einen Autoencoder, einen variationalen Autoencoder, einen Gaußprozess, eine Deep-Learning-Architektur, eine Support-Vektor-Maschine, ein datengetriebenes Regressionsmodell, einen k-nächste-Nachbarn-Klassifikator, ein physikalisches Modell und/oder einen Entscheidungsbaum umfassen.

Zum Steuern der Maschine M wird deren Sensorsignal SS als Eingabesignal in eine Eingabeschicht des trainierten Maschinenlernmoduls NN eingespeist. Aus dem Sensorsignal SS leitet das trainierte Maschinenlernmodul NN mindestens einen späteren Signalwert des Sensorsignals SS ab. Anhand des Sensorsignals SS und des mindestens einen späteren Signalwerts erzeugt die Steuereinrichtung CTL, beispielsweise mittels eines lernbasierten Steuerungsagenten (nicht dargestellt), ein Steuersignal CS zum Steuern der Maschine M. Zur Implementierung derartiger Steuerungsagenten steht eine Vielzahl effizienter Verfahren des maschinellen Lernens, insbesondere des bestärkenden Lernens zur Verfügung. Anstelle oder zusätzlich zu einem lernbasierten Steuerungsagenten kann auch ein regelbasierter Steuerungsagent verwendet werden.

Insofern der mindestens eine prädizierte Signalwert mindestens einen wahrscheinlichen späteren Betriebszustand der Maschine M spezifiziert oder beschreibt, kann das Steuersignal CS durch die Steuereinrichtung CTL in vorausschauender Weise optimiert werden. Das Steuersignal CS kann insbesondere dahingehend optimiert werden, dass die Maschine M in dem durch das eingespeiste Sensorsignal SS spezifizierten Betriebszustand derart gesteuert wird, dass eine Performanz oder ein Betriebsverhalten der Maschine M zu einem aktuellen und zu mindestens einem späteren Zeitpunkt optimiert wird.

Das generierte Steuersignal CS wird schließlich von der Steuereinrichtung CTL zur Maschine M übermittelt, um diese in optimierter Weise zu steuern.

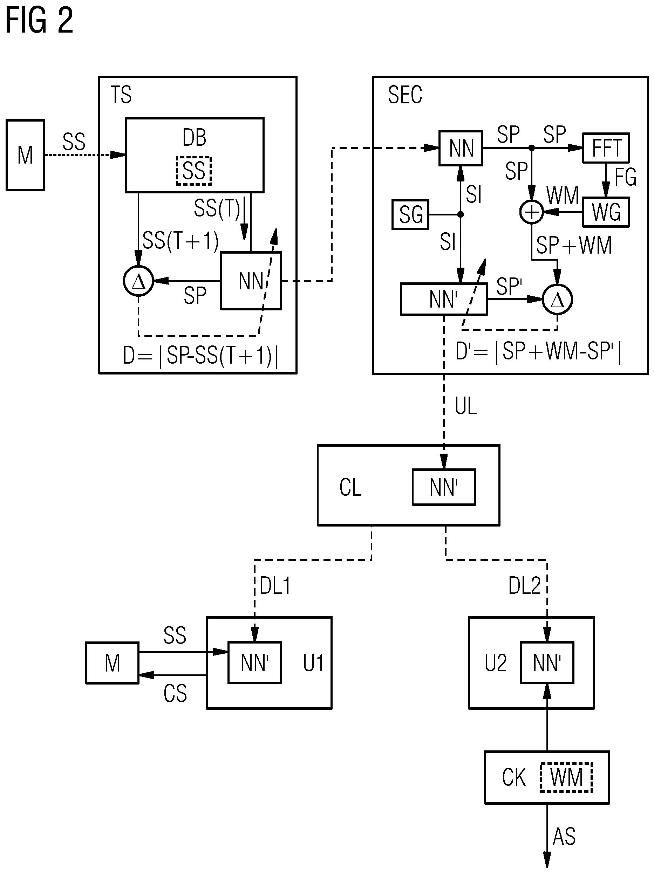

Figur 2 veranschaulicht ein erfindungsgemäßes Schutzsystem für ein Maschinenlernmodul, hier NN.

Das zu schützende Maschinenlernmodul NN wird vorab in einem Trainingssystem TS darauf trainiert, anhand einer Zeitreihe eines Sensorsignals SS der Maschine M mindestens einen späteren Signalwert des Sensorsignals SS als Ausgabesignal zu prädizieren.

Das Training wird anhand einer großen Menge von Zeitreihen des Sensorsignals SS ausgeführt, die als Trainingsdaten fungieren. Die Trainingsdaten stammen von der zu steuernden Maschine M, von einer dazu ähnlichen Maschine und/oder von einer Simulation der Maschine M. Im vorliegenden Ausführungsbeispiel stammen die Trainingsdaten von der Maschine M und sind in einer Datenbank DB des Trainingssystems TS gespeichert.

Die Signalwerte einer Zeitreihe des Sensorsignals SS bis zu einem jeweiligen Zeitpunkt T werden im Folgenden als SS(T) bezeichnet. Entsprechend wird ein Signalwert dieser Zeitreihe zu einem gegenüber dem jeweiligen Zeitpunkt T späteren Zeitpunkt T+1 als SS(T+1) notiert. Die Bezeichnung T+1 steht hierbei nicht nur für einen in der Zeitreihe unmittelbar auf den Zeitpunkt T folgenden Zeitpunkt, sondern kann auch einen beliebigen gegenüber T späteren Zeitpunkt bezeichnen.

Unter einem Training sei allgemein eine Optimierung einer Abbildung eines Eingabesignals eines Maschinenlernmoduls auf dessen Ausgabesignal verstanden. Diese Abbildung wird nach vorgegebenen Kriterien während einer Trainingsphase optimiert. Als Kriterium können insbesondere bei Prädiktionsmodellen wie dem Maschinenlernmodul NN ein Prädiktionsfehler und bei Steuermodellen ein Erfolg einer Steueraktion herangezogen werden. Durch das Training können beispielsweise Vernetzungsstrukturen von Neuronen eines neuronalen Netzes und/oder Gewichte von Verbindungen zwischen den Neuronen so eingestellt bzw. optimiert werden, dass die vorgegebenen Kriterien möglichst gut erfüllt werden. Das Training kann somit als Optimierungsproblem aufgefasst werden.

Für derartige Optimierungsprobleme auf dem Gebiet des maschinellen Lernens sind eine Vielzahl von effizienten Optimierungsverfahren verfügbar, insbesondere gradientenbasierte Optimierungsverfahren, gradientenfreie Optimierungsverfahren, Rückpropagationsverfahren, Partikelschwarmoptimierungen, genetische Optimierungsverfahren und/oder populationsbasierte Optimierungsverfahren. Trainieren lassen sich insbesondere künstliche neuronale Netze, rekurrente neuronale Netze, faltende neuronale Netze, Perzeptrone, bayessche neuronale Netze, Autoencoder, variationale Autoencoder, Gaußprozesse, Deep-Learning-Architekturen, Support-Vektor-Maschinen, datengetriebene Regressionsmodelle, k-nächste-Nachbarn-Klassifikatoren, physikalische Modelle und/oder Entscheidungsbäume.

Zum Training des Maschinenlernmoduls NN werden die in den Trainingsdaten enthaltenen Zeitreihen des Sensorsignals SS dem Maschinenlernmodul NN als Eingabesignale zugeführt. Aus den bis zu einem jeweiligen Zeitpunkt T vorliegenden Signalwerten SS(T) erzeugt das Maschinenlernmodul NN ein Ausgabesignal SP. Im Zuge des Trainings werden dann neuronale Gewichte oder andere Parameter des Maschinenlernmoduls NN vorzugsweise durch eines der oben erwähnten Optimierungsverfahren derart eingestellt, dass ein jeweiliger späterer Signalwert SS(T+1) des Sensorsignals SS durch das Ausgabesignal SP möglichst genau reproduziert werden.

Zu diesem Zweck wird im vorliegenden Ausführungsbeispiel das Ausgabesignal SP mit dem jeweiligen späteren Signalwert SS(T+1) verglichen, und es wird ein jeweiliger Abstand D zwischen diesen Signalen ermittelt. Als Abstand D kann beispielsweise ein euklidischer Abstand zwischen den jeweils darstellenden Datenvektoren oder eine andere Norm von deren Differenz ermittelt werden, z.B. gemäß D = | SP-SS(T+1) | oder D = (SP-SS(T+1))².

Zum Training des Maschinenlernmoduls NN werden die ermittelten Abstände D zum Maschinenlernmodul NN zurückgeführt. Dessen neuronale Gewichte oder andere Lernparameter werden dann so eingestellt, dass die Abstände D zumindest im statistischen Mittel minimiert werden. Der Abstand D fungiert somit als Kostenfunktion im Sinne des maschinellen Lernens.

Durch das Training wird das Maschinenlernmodul NN dazu befähigt, einen jeweils zukünftigen Signalwert, hier SS(T+1) des Sensorsignals SS vorherzusagen. Das Ausgabesignal SP stellt somit einen jeweiligen prädizierten Signalwert des Sensorsignals SS dar.

Das vorstehend beschriebene Training des Maschinenlernmoduls NN kann auch außerhalb des Schutzsystems von einem Drittanbieter durchgeführt werden. Die Erfindung erlaubt es somit, auch von Dritten trainierte Maschinenlernmodule zu schützen.

Das trainierte Maschinenlernmodul NN wird nach dem Training vom Trainingssystem TS zu einem Sicherungssystem SEC übermittelt. Das Sicherungssystem SEC dient unter anderem dem Zweck, das trainierte Maschinenlernmodul NN gegen unkontrollierte oder unberechtigte Verbreitung zu schützen. Hierzu wird dem trainierten Maschinenlernmodul NN ein digitales Wasserzeichen in Form eines Wasserzeichensignals WM aufgeprägt, anhand dessen sich das Maschinenlernmodul NN und/oder seine Herkunft später identifizieren lassen.

Ein Informationsinhalt des Wasserzeichensignals WM kann vorgegeben sein und beispielsweise einen Ersteller des Maschinenlernmoduls NN oder das Sicherungssystem SEC eindeutig identifizieren. Alternativ oder zusätzlich kann der Informationsinhalt des Wasserzeichensignals WM dynamisch erzeugt werden, um so das Maschinenlernmodul NN beispielweise durch eine Seriennummer oder eine andere Information zu kennzeichnen. Als Informationsinhalt kann insbesondere ein Bitstring vorgegebener Länge vorgesehen sein.

Zu den vorstehenden Zwecken wird in das trainierte Maschinenlernmodul NN zunächst ein Eingabesignal SI eingespeist. Falls im Sicherungssystem SEC ein Sensorsignal SS der Maschine M verfügbar ist, wird vorzugsweise dieses Sensorsignal SS als Eingabesignal SI verwendet.

Falls dagegen ein solches Sensorsignal SS im Sicherungssystem SEC nicht verfügbar ist - z.B. bei von Drittanbietern trainierten Maschinenlernmodulen - kann das Eingabesignal SI von einem Signalgenerator SG des Sicherungssystems SEC generiert werden. Hierbei kann insbesondere ein zufallsbasiertes Eingabesignal SI generiert werden.

Falls Angaben über statistische Eigenschaften des Sensorsignals SS im Sicherungssystem SEC verfügbar sind, können durch den Signalgenerator SG vorzugsweise Eingabesignale SI mit einer im Wesentlichen gleichen oder zumindest ähnlichen statistischen Verteilung wie das Sensorsignal SS generiert werden. Es zeigt sich in der Praxis, dass der erfinderische Wasserzeichenschutz durch die Verwendung zufallsbasierter Eingabesignale SI im Vergleich zur Verwendung eines von der Maschine M stammenden Sensorsignals SS nur geringfügig beeinträchtigt wird.

Für das vorliegende Ausführungsbeispiel sei angenommen, dass das Eingabesignal SI durch den Signalgenerator SG zufallsbasiert generiert und in eine Eingabeschicht des trainierten Maschinenlernmoduls NN eingespeist wird.

Aus dem Eingabesignal SI leitet das trainierte Maschinenlernmodul NN ein resultierendes Ausgabesignal SP ab und gibt dieses über eine Ausgabeschicht des trainierten Maschinenlernmoduls NN aus.

Das resultierende Ausgabesignal SP wird in einen Frequenzanalysator FFT des Sicherungssystems SEC eingespeist, der ein Frequenzspektrum des resultierenden Ausgabesignals SP generiert. Das Frequenzspektrum wird dabei vorzugsweise numerisch mittels einer sogenannten Fast-Fourier-Transformation ermittelt.

Weiterhin werden durch den Frequenzanalysator FFT eine oder mehrere Frequenzlücken FG im Frequenzspektrum ermittelt. Als Frequenzlücke kann insbesondere ein Frequenzbereich im Frequenzspektrum aufgefasst werden, in dem das resultierende Ausgabesignal SP eine vergleichsweise geringere Spektralamplitude aufweist, also ein vom resultierenden Ausgabesignal SP ungenutzter oder nur wenig genutzter Frequenzbereich.

Zur Erkennung einer jeweiligen Frequenzlücke FG kann zunächst eine mittlere oder maximale Spektralamplitude des resultierenden Ausgabesignals SP im Frequenzspektrum ermittelt werden. Anhand der mittleren oder maximalen Spektralamplitude kann das Frequenzspektrum auf bekannte Weise normiert werden. Als jeweilige Frequenzlücke FG kann dann ein jeweiliges Frequenzintervall im Frequenzspektrum ermittelt werden, in dem die normierte Spektralamplitude des resultierenden Ausgabesignals SP unterhalb eines vorgegebenen Schwellwerts, von z.B. 10%, 5%, 2% oder 1% der normierten mittleren oder maximalen Spektralamplitude bleibt.

Falls mehrere Frequenzlücken ermittelt werden, können die in diesen Frequenzlücken auftretenden mittleren oder maximalen normierten Spektralamplituden miteinander verglichen werden. Darüber hinaus können die mittleren Frequenzen der verschiedenen Frequenzlücken und/oder die Frequenzbreiten dieser Frequenzlücken miteinander verglichen werden. Aus den ermittelten Frequenzlücken kann dann vorzugsweise diejenige Frequenzlücke FG selektiert werden, die die geringste mittlere oder maximale Spektralamplitude, die geringste mittlere Frequenz und/oder die größte Frequenzbreite aufweist. Gegebenenfalls können die vorstehenden Vergleichskriterien auch durch vorgegebene Gewichtsfaktoren gewichtet werden, und es kann diejenige Frequenzlücke FG selektiert werden, die eine entsprechende gewichtete Summe maximiert.

Die durch den Frequenzanalysator FFT ermittelte und ggf. selektierte Frequenzlücke FG wird vom Frequenzanalysator FFT zu einem Wasserzeichengenerator WG des Sicherungssystems SEC übermittelt.

Abhängig von der Frequenzlücke FG generiert der Wasserzeichengenerator WG das Wasserzeichensignal WM mit einem in die Frequenzlücke FG fallenden, d.h. darin enthaltenen Frequenzmuster. Eine Amplitude des Wasserzeichensignals WM wird dabei so gewählt, dass damit markierte Ausgabesignale des Maschinenlernmoduls NN, d.h. die prädizierten Signalwerte des Sensorsignals SS nur geringfügig verändert werden. Beispielsweise kann die Amplitude des Wasserzeichensignals WM um einen vorgegebenen Faktor von z.B. 5, 10, 20, 50 oder 100 kleiner als eine mittlere oder maximale Amplitude des resultierenden Ausgabesignals SP gewählt werden. Alternativ oder zusätzlich kann auch ein Vorhersagefehler des trainierten Maschinenlernmoduls NN empirisch ermittelt und die Amplitude kleiner als dieser Vorhersagefehler gewählt werden. Auf diese Weise wird eine spätere Steuerung der Maschine M durch die Markierung des trainierten Maschinenlernmoduls NN in der Regel kaum beeinträchtigt.

Zum Markieren des trainierten Maschinenlernmoduls NN wird das Wasserzeichensignal WM zum resultierenden Ausgabesignal SP addiert, um ein modifiziertes und damit markiertes Ausgabesignal SP+WM zu erhalten.

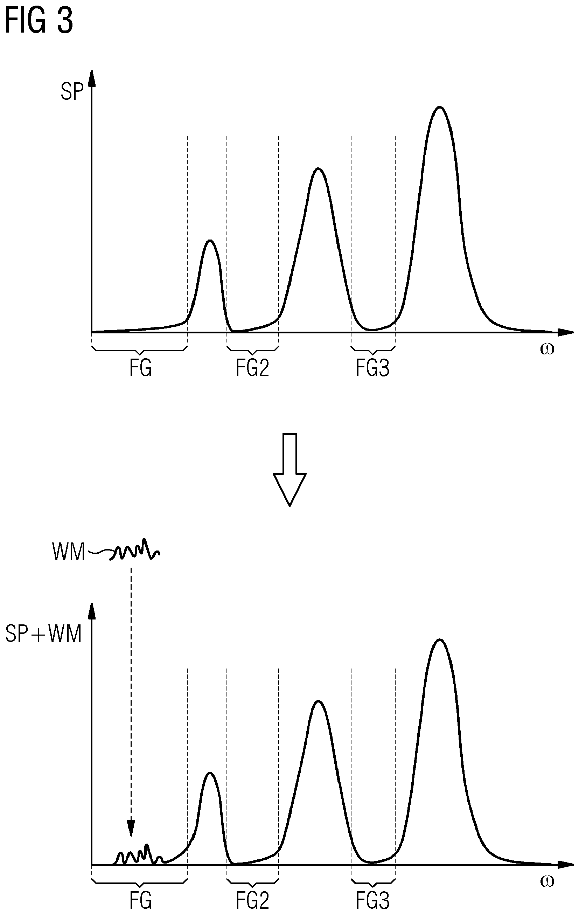

Eine solche Markierung des resultierenden Ausgabesignals SP durch das Wasserzeichensignal WM wird durch Figur 3 weiter veranschaulicht.

Im oberen Teil von Figur 3 ist ein Frequenzspektrum des resultierenden Ausgabesignals SP gegen die Frequenz ω aufgetragen, während im unteren Teil ein Frequenzspektrum des modifizierten Ausgabesignals SP+WM in entsprechender Weise dargestellt ist.

Wie oben beschrieben, werden durch den Frequenzanalysator FFT Frequenzlücken FG, FG2 und FG3 im Frequenzspektrum des resultierenden Ausgabesignals SP ermittelt. Aus den ermittelten Frequenzlücken FG, FG2 und FG3 wird dann durch den Frequenzanalysator FFT die Frequenzlücke FG mit der kleinsten mittleren Frequenz und der größten Frequenzbreite zur Aufnahme des Wasserzeichensignals WM selektiert. Dementsprechend wird das Wasserzeichensignal WM derart generiert, dass sein Frequenzmuster in der selektierten Frequenzlücke FG enthalten ist. Das so generierte Wasserzeichensignal WM wird dann zum resultierenden Ausgabesignal SP addiert, um das modifizierte Ausgabesignal SP+WM zu erhalten.

Wie Figur 2 weiter veranschaulicht, wird das modifizierte Ausgabesignal SP+WM und damit das Wasserzeichensignal WM dem trainierten Maschinenlernmodul NN durch ein zusätzliches Training aufgeprägt.

Zu diesem Zweck wird zunächst eine weitere Instanz oder eine Kopie des trainierten Maschinenlernmoduls NN erzeugt, die im Folgenden als Maschinenlernmodul NN' bezeichnet wird. Das Maschinenlernmodul NN' wird dahingehend weitertrainiert, dass ein Ausgabesignal SP' mit aufmoduliertem Wasserzeichensignal WM ausgegeben wird.

Hierzu wird das vom Signalgenerator SG generierte Eingabesignal SI beiden Maschinenlernmodulen NN und NN' zugeführt. Zu dem resultierenden Ausgabesignal SP des Maschinenlernmoduls NN wird anschließend das Wasserzeichensignal WM wie oben beschrieben addiert.

Daraufhin wird ein Abstand D' zwischen dem resultierenden Ausgabesignal SP' des Maschinenlernmoduls NN' und der Summe des resultierenden Ausgabesignals SP und des Wasserzeichensignals WM ermittelt. Als jeweiliger Abstand D' kann beispielsweise ein euklidischer Abstand zwischen den jeweils darstellenden Datenvektoren oder eine andere Norm von deren Differenz ermittelt werden, z.B. gemäß D' = | SP+WM - SP' | oder D' = (SP+WM - SP')².

Zum Weitertrainieren des Maschinenlernmoduls NN' werden die ermittelten Abstände D' zum Maschinenlernmodul NN' zurückgeführt. Dessen neuronale Gewichte oder andere Lernparameter werden dann so eingestellt, dass die Abstände D' zumindest im statistischen Mittel minimiert werden. Auf diese Weise wird das Maschinenlernmodul NN' darauf trainiert, ein durch das Wasserzeichensignal WM modifiziertes und damit markiertes Ausgabesignal SP' auszugeben. In diesem Zusammenhang sei besonders erwähnt, dass auf diese Weise auch von Drittanbietern trainierte Maschinenlernmodule in der Regel ohne Rückgriff auf deren Trainingsdaten erfolgreich weitertrainiert werden können.

Das weitertrainierte, durch das Wasserzeichensignal WM markierte Maschinenlernmodul NN' kann anschließend zur Benutzung bereitgestellt werden. Zu diesem Zweck wird das weitertrainierte Maschinenlernmodul NN' vom Sicherungssystem SEC durch einen Upload UL in eine Cloud CL, insbesondere in einen App-Store der Cloud CL übertragen.

Aus der Cloud CL oder ihrem App-Store wird das bereitgestellte Maschinenlernmodul NN' im vorliegenden Ausführungsbeispiel einerseits durch einen ersten Download DL1 zu einem System U1 eines ersten Anwenders und andererseits durch einen zweiten Download DL2 zu einem System U2 eines zweiten Anwenders heruntergeladen.

Für das vorliegende Ausführungsbeispiel sei angenommen, dass der erste Anwender mit Hilfe des bereitgestellten Maschinenlernmoduls NN' auf seinem System U1 die Maschine M oder eine dazu ähnliche Maschine bestimmungsgemäß steuern möchte und auch dazu berechtigt ist. Demgegenüber ist der zweite Anwender nicht dazu berechtigt, das heruntergeladene Maschinenlernmodul NN' zu nutzen.

Durch das System U1 wird zum Steuern der Maschine M ein Sensorsignal SS der Maschine M empfangen und als Eingabesignal in das heruntergeladene Maschinenlernmodul NN' eingespeist. Aus dem Sensorsignal SS leitet das heruntergeladene Maschinenlernmodul NN' - wie oben beschrieben - ein resultierendes Ausgabesignal ab. Das resultierende Ausgabesignal kann dann durch das System U1 dahingehend geprüft werden, ob es das Wasserzeichensignal WM enthält. Zu diesem Zweck wird ein Frequenzspektrum dieses Ausgabesignals ermittelt, das dann nach dem Frequenzmuster des Wasserzeichensignals WM durchsucht wird. Sofern das Wasserzeichensignal WM gefunden wird, kann das Maschinenlernmodul NN' als authentisch aufgefasst werden und infolgedessen zum Steuern der Maschine M freigeschaltet werden.

Im vorliegenden Ausführungsbeispiel enthält das resultierende Ausgabesignal des heruntergeladenen Maschinenlernmoduls NN' das Wasserzeichensignal WM und wird deshalb zum Steuern der Maschine M freigeschaltet. Infolgedessen wird - wie im Zusammenhang mit Figur 1 beschrieben - anhand des Sensorsignals SS sowie des resultierenden Ausgabesignals durch das System U1 ein vorausschauend optimiertes Steuersignal CS zum Steuern der Maschine M abgeleitet und zu diesem Zweck zur Maschine M übermittelt. Insofern das Ausgabesignal durch das Wasserzeichensignal WM nur geringfügig verändert wird, wird die Steuerung der Maschine M kaum beeinträchtigt.

Im Unterschied zum ersten Anwender ist der zweite Anwender nicht berechtigt das Maschinenlernmodul NN' zu nutzen. Um eine unberechtigte Benutzung bzw. einen Diebstahl zumindest zu erkennen oder nachzuweisen, kann das Maschinenlernmodul NN' anhand seines digitalen Wasserzeichens WM erkannt oder identifiziert werden.

Zur Erkennung einer solchen unberechtigten Benutzung bzw. eines Diebstahls wird das vom zweiten Anwender heruntergeladene Maschinenlernmodul, hier NN', mittels einer Prüfeinrichtung CK auf ein Vorhandensein des Wasserzeichensignals WM geprüft. Hierzu wird durch die Prüfeinrichtung CK ein Frequenzspektrum eines resultierenden Ausgabesignals dieses Maschinenlernmoduls NN' wie oben beschreiben ermittelt. Das ermittelte Frequenzspektrum wird dann durch die Prüfeinrichtung CK nach dem Frequenzmuster des Wasserzeichensignals WM durchsucht.

Hierbei kann insbesondere ein Mustervergleich zwischen Frequenzmustern des ermittelten Frequenzspektrums und dem Frequenzmuster des Wasserzeichensignals WM durchgeführt werden. Als Kriterium für ein Vorhandensein des Wasserzeichensignals WM kann dabei eine Übereinstimmung, eine näherungsweise Übereinstimmung oder eine Ähnlichkeit der verglichenen Frequenzmuster herangezogen werden. Insbesondere kann ein ggf. gewichteter euklidischer Abstand zwischen Datenvektoren ermittelt werden, durch die die verglichenen Frequenzmuster repräsentiert werden. Ein Vorhandensein des Wasserzeichensignals WM kann z.B. dann signalisiert werden, wenn der euklidische Abstand einen vorgegebenen Schwellwert unterschreitet.

Infolge einer Erkennung des Wasserzeichensignals WM wird durch die Prüfeinrichtung CK ein Alarmsignal AS mittels eines Alarmgebers ausgegeben. Das Alarmsignal AS kann an einen Ersteller des Maschinenlernmoduls NN, an das Trainingssystem TS und/oder an das Sicherungssystem SEC übermittelt werden, um die betreffende Stelle darüber zu informieren, dass ein vorliegendes Maschinenlernmodul, hier NN', unberechtigt verwendet oder in Verkehr gebracht wurde.

## Patentansprüche

1. Computerimplementiertes Verfahren zum Diebstahlschutz eines Maschinenlernmoduls (NN), das darauf trainiert ist, anhand einer Zeitreihe eines Sensorsignals (SS) spätere Signalwerte des Sensorsignals (SS) als Ausgabesignal (SP) zu prädizieren, wobei
a) ein Eingabesignal (SI) in das Maschinenlernmodul (NN) eingespeist wird, und ein Frequenzspektrum eines resultierenden Ausgabesignals (SP) generiert wird,
b) eine Frequenzlücke (FG) im Frequenzspektrum ermittelt wird,
c) ein Wasserzeichensignal (WM) mit einem in die Frequenzlücke (FG) fallenden Frequenzmuster generiert wird,
d) das Maschinenlernmodul (NN) dahingehend weitertrainiert wird, dass ein Ausgabesignal (SP') mit aufmoduliertem Wasserzeichensignal (WM) ausgegeben wird,
e) das weitertrainierte Maschinenlernmodul (NN') zur Benutzung bereitgestellt wird,
f) ein Eingabesignal in ein vorliegendes Maschinenlernmodul (NN') eingespeist wird,
g) geprüft wird, ob ein resultierendes Ausgabesignal des vorliegenden Maschinenlernmoduls (NN') das Wasserzeichensignal (WM) enthält, und
h) abhängig vom Prüfungsergebnis ein Alarmsignal (AS) ausgegeben wird.

2. Verfahren nach Anspruch 1, **dadurch gekennzeichnet, dass** zum Weitertrainieren des Maschinenlernmoduls (NN)
- dem resultierenden Ausgabesignal (SP) das Wasserzeichensignal (WM) aufmoduliert wird, um ein modifiziertes Ausgabesignal (SP+WM) zu erhalten, und
- das Maschinenlernmodul (NN) darauf trainiert wird, das modifizierte Ausgabesignal (SP+WM) zu reproduzieren.

3. Verfahren nach einem der vorhergehenden Ansprüche, **dadurch gekennzeichnet, dass**
zum Aufmodulieren des Wasserzeichensignals (WM) das Wasserzeichensignal (WM) mit dem resultierenden Ausgabesignal (SP) durch Addition, Subtraktion oder eine andere frequenzmustererhaltende numerische Verknüpfung verknüpft wird.

4. Verfahren nach einem der vorhergehenden Ansprüche, **dadurch gekennzeichnet, dass**
zum Generieren des Frequenzspektrums, zum Weitertrainieren des Maschinenlernmoduls (NN) und/oder zum Prüfen des vorliegenden Maschinenlernmoduls (NN') das Sensorsignal (SS) und/oder ein zufallsbasiertes Eingabesignal (SI) in das Maschinenlernmodul (NN, NN') als Eingabesignal eingespeist wird.

5. Verfahren nach einem der vorhergehenden Ansprüche, **dadurch gekennzeichnet,**
**dass** die ermittelte Frequenzlücke (FG) in einer Datenbank in Zuordnung zum bereitgestellten Maschinenlernmodul (NN') hinterlegt wird, und
**dass** das Frequenzmuster des Wasserzeichensignals (WM) in der dem bereitgestellten Maschinenlernmodul (NN') zugeordneten Frequenzlücke (FG) im resultierenden Ausgabesignal des vorliegenden Maschinenlernmoduls (NN') gesucht wird.

6. Verfahren nach einem der vorhergehenden Ansprüche, **dadurch gekennzeichnet,**
**dass** mehrere Frequenzlücken (FG, FG2, FG3) im Frequenzspektrum ermittelt werden,
**dass** in den ermittelten Frequenzlücken (FG, FG2, FG3) vorliegende Spektralamplituden und/oder Frequenzen des resultierenden Ausgabesignals (SP) verglichen werden,
**dass** eine der ermittelten Frequenzlücken (FG, FG2, FG3) abhängig vom Vergleichsergebnis selektiert wird, und
**dass** das Wasserzeichensignal (WM) mit einem in die selektierte Frequenzlücke (FG) fallenden Frequenzmuster generiert wird.

7. Verfahren nach einem der vorhergehenden Ansprüche, **dadurch gekennzeichnet,**
**dass** mehrere Zeitreihen von Sensorsignalen in das Maschinenlernmodul (NN) eingespeist werden,
**dass** mehrere sensorsignalspezifische Frequenzspektren resultierender Ausgabesignale generiert werden, und
**dass** als Frequenzlücke (FG) eine den Frequenzspektren gemeinsame Frequenzlücke ermittelt wird.

8. Verfahren nach einem der vorhergehenden Ansprüche, **dadurch gekennzeichnet,**
**dass** mehrere Zeitreihen von Sensorsignalen in das Maschinenlernmodul (NN) eingespeist werden,
**dass** resultierende Ausgabesignale zu einer sensorsignalübergreifenden Zeitreihe konkateniert werden, und
**dass** als Frequenzspektrum ein Spektrum der konkatenierten Ausgabesignale generiert wird.

9. Verfahren nach einem der vorhergehenden Ansprüche, **dadurch gekennzeichnet,**
**dass** mehrere Zeitreihen von Sensorsignalen in das Maschinenlernmodul (NN) eingespeist werden,
**dass** mehrere sensorsignalspezifische Frequenzspektren resultierender Ausgabesignale generiert werden,
**dass** die Sensorsignale in Signalgruppen mit im Wesentlichen übereinstimmenden Frequenzlücken im jeweiligen Frequenzspektrum gruppiert werden, und
**dass** als Frequenzlücke (FG) eine signalgruppenspezifische Frequenzlücke selektiert wird.

10. Schutzsystem zum Diebstahlsschutz eines Maschinenlernmoduls (NN), das darauf trainiert ist, anhand einer Zeitreihe eines Sensorsignals (SS) spätere Signalwerte des Sensorsignals (SS) als Ausgabesignal (SP) zu prädizieren, eingerichtet zum Ausführen aller Verfahrensschritte eines Verfahrens nach einem der vorhergehenden Ansprüche.

11. Computerprogrammprodukt eingerichtet zum Ausführen eines Verfahrens nach einem der Ansprüche 1 bis 9.

12. Computerlesbares Speichermedium mit einem Computerprogrammprodukt nach Anspruch 11.
